(19) Europäisches Patentamt

European Patent Office

Office européen des brevets

(11) **EP 0 845 726 B1**

(12) **FASCICULE DE BREVET EUROPEEN**

(45) Date de publication et mention
de la délivrance du brevet:
**02.01.2002 Bulletin 2002/01**

(51) Int Cl.$^7$: **G05D 1/06**

(21) Numéro de dépôt: **97402704.7**

(22) Date de dépôt: **13.11.1997**

(54) **Procédé et dispositif pour la détection de rafales de vent à bord d'un aéronef**

Verfahren und Vorrichtung zur Detektion von Windstössen in einem Luftfahrzeug

Method and apparatus for detecting gusts of wind in an aircraft

(84) Etats contractants désignés:
**DE GB**

(30) Priorité: **02.12.1996 FR 9614736**

(43) Date de publication de la demande:
**03.06.1998 Bulletin 1998/23**

(60) Demande divisionnaire:
**00102752.3 / 1 004 951**

(73) Titulaire: **AEROSPATIALE MATRA**
**75016 Paris (FR)**

(72) Inventeurs:
• **Larramendy, Panxika**
**31000 Toulouse (FR)**

• **Delgado, Daniel**
**31830 Plaisance du Touch (FR)**

(74) Mandataire: **Bonnetat, Christian**
**CABINET BONNETAT 29, rue de St. Pétersbourg**
**75008 Paris (FR)**

(56) Documents cités:
**EP-A- 0 297 939    FR-A- 2 334 110**
**US-A- 3 814 912**

• **ZWEIFEL T: "OPTIMAL GUIDANCE DURING A WINDSHEAR ENCOUNTER" SCIENTIFIC HONEYWELLER, vol. 10, no. 1, 1 janvier 1989, pages 110-116, XP000142039 MINNEAPOLIS**

**Description**

La présente invention concerne un procédé pour la détection de rafales de vent vertical à bord d'un aéronef en vol de croisière, ainsi qu'un dispositif de détection mettant en oeuvre ledit procédé. Les rafales de vent vertical concernées par la présente invention sont des turbulences tourbillonnaires (et non pas des turbulences à hautes fréquences sources de vibrations), engendrées par des rouleaux tourbillonnaires de type vortex, qui soumettent l'aéronef qui les traverse ou passe à leur périphérie, à une rafale de vent ascendant (ou descendant), puis à une rafale de vent descendant (ou ascendant) durant quelques secondes, ou bien à une succession de rafales de vent ascendant et descendant, dans le cas d'une pluralité de vortex.

Si l'aéronef est en vol de croisière en pilotage manuel et rencontre une telle rafale de vent ascendant, il est soumis, dans un premier temps, à un facteur de charge positif important, de sorte que le pilote réagit en commandant l'aéronef à piquer, afin de contrer l'effet du vent ascendant. Cependant, dans un deuxième temps, la rafale change de sens et le vent devient descendant, de sorte que maintenant l'action à piquer du pilote s'ajoute à la rafale de vent descendant pour appliquer à l'aéronef un facteur de charge négatif, encore plus élevé que celui qui résulterait de la rafale elle-même. Il peut donc en résulter des blessures pour les passagers et des détériorations pour l'aéronef.

Il en est de même si l'aéronef comporte un pilote automatique et si ce pilote automatique est engagé en vol de croisière, au moment de la rencontre avec la rafale de vent ascendant.

En effet, cette rafale a pour conséquence la déconnexion du pilote automatique et le passage en pilotage manuel, soit de façon automatique par action de dispositifs de protection (par exemple protection en incidence), soit par suite d'une action instinctive du pilote sur le manche. Là encore, l'action à piquer du pilote s'ajoutera à la rafale de vent inversée.

Bien entendu, ce qui a été décrit ci-dessus s'applique mutatis mutandis au cas de la rencontre d'une rafale de vent descendant, puis ascendant.

Ainsi, de ce qui précède, on comprendra aisément que, de façon générale, toute action de pilotage pour contrer une rafale de vent produit ses effets au moment de l'inversion de sens de ladite rafale, de sorte que cette action de pilotage accroît défavorablement le facteur de charge, déjà élevé, auquel ladite rafale soumet l'aéronef.

On notera cependant que le document US-A-3,814,912 décrit un système pour engendrer à bord d'un aéronef des signaux qui sont proportionnels aux rafales de vent horizontales et verticales et qui permettent de compenser les pertes de portance dues auxdites rafales.

La présente invention a également pour objet de remédier à l'inconvénient mentionné ci-dessus et d'améliorer le comportement et le pilotage de l'aéronef en présence de rafales de vent vertical.

A cette fin, selon l'invention, pour la détection de rafales de vent vertical à bord d'un aéronef en vol de croisière, on met en oeuvre un procédé remarquable :

- en ce que l'on calcule la valeur absolue de la différence entre les dérivées premières par rapport au temps de l'incidence actuelle et de l'attitude actuelle de l'aéronef ;
- en ce que l'on compare ladite valeur absolue à un seuil supérieur ;
- en ce que l'on compare le nombre de Mach actuel dudit aéronef à un seuil de nombre de Mach ; et
- en ce que l'on engendre un signal électrique représentatif de la présence d'une rafale de vent vertical, lorsque, simultanément :

  . ladite valeur absolue est supérieure audit seuil supérieur ;
  . ledit nombre de Mach actuel est supérieur audit seuil de nombre de Mach ; et
  . les volets et becs aérodynamiques dudit aéronef sont en configuration lisse.

On obtient ainsi un procédé de détection de rafales particulièrement simple, ne faisant intervenir que des paramètres disponibles à bord d'un aéronef, à savoir l'incidence, l'attitude, le nombre de Mach et la position des volets et becs aérodynamiques.

Pour ne pas détecter des vents instantanés non représentatifs de rafales, et notamment des bruits de mesure, il est avantageux de filtrer ladite valeur absolue avant de la comparer audit seuil supérieur. Celui-ci, selon une autre particularité de la présente invention, peut être choisi au moins approximativement égal à 1 degré d'angle par seconde.

De même, afin d'éviter une génération intempestive dudit signal électrique représentatif de la présence d'une rafale de vent vertical, on subordonne avantageusement cette génération au fait que ladite valeur absolue est supérieure audit seuil supérieur pendant au moins une première durée déterminée. Cette première durée déterminée peut avoir une valeur de l'ordre de 200 ms.

De préférence, pour avoir une information sur la fin d'une rafale, on compare de plus ladite valeur absolue à un seuil inférieur, qui est plus petit que ledit seuil supérieur et qui correspond de façon certaine à une absence de rafale. Un tel seuil inférieur peut être au moins approximativement égal à 0,5 degré d'angle par seconde.

Par ailleurs, pour éviter que ledit signal électrique représentatif de la présence d'une rafale disparaisse immédiatement dès que ladite valeur absolue devient égale (en décroissant) audit seuil supérieur, on prévoit que, lorsque ladite valeur absolue passe d'une valeur supérieure à une valeur inférieure audit seuil supérieur, ledit signal représentatif de la présence d'une rafale de vent vertical est maintenu jusqu'à ce que ladite valeur absolue devienne inférieure audit seuil inférieur, pour autant que :

- ledit nombre de Mach actuel est supérieur audit seuil de nombre de Mach ; et
- les volets et becs aérodynamiques dudit aéronef sont en configuration lisse.

Ainsi, on obtient une confirmation de fin de rafale.

De plus, pour que cette confirmation soit encore plus grande, le maintien dudit signal électrique représentatif de la présence de rafales de vent vertical est subordonné au fait que ladite valeur absolue est inférieure audit seuil inférieur pendant au moins une seconde durée prédéterminée.

Une telle seconde durée prédéterminée peut être de l'ordre de 1 seconde.

La présente invention concerne de plus un dispositif pour la détection de rafales de vent vertical à bord d'un aéronef en vol de croisière, mettant en oeuvre le procédé spécifié ci-dessus et remarquable en ce qu'il comporte :

- des moyens de soustraction recevant la dérivée première par rapport au temps de l'incidence actuelle et la dérivée première par rapport au temps de l'attitude actuelle et délivrant à leur sortie la valeur absolue de la différence entre lesdites dérivées ;
- des premiers moyens de comparaison pour comparer ladite valeur absolue à un seuil supérieur et pour délivrer un signal si ladite valeur absolue est supérieure audit seuil supérieur ;
- des deuxièmes moyens de comparaison pour comparer le nombre de Mach actuel de l'aéronef à un seuil de nombre de Mach et pour délivrer un signal si ledit nombre de Mach actuel est supérieur audit seuil de nombre de Mach ; et
- des premiers moyens logiques de type ET recevant, respectivement, à leurs entrées :

  . ledit signal résultant de la comparaison de ladite valeur absolue audit seuil supérieur ;
  . ledit signal résultant de la comparaison dudit nombre de Mach actuel audit seuil de nombre de Mach ; et
  . un signal représentatif du fait que les volets et les becs aérodynamiques dudit aéronef sont en configuration lisse,

  lesdits premiers moyens logiques délivrant à leur sortie un signal représentatif de la présence de rafales de vent vertical.

De préférence, ledit dispositif utilise des mesures de l'incidence actuelle et de l'attitude actuelle disponibles à bord de l'aéronef, de sorte qu'il comporte des moyens de dérivation recevant des signaux représentatifs de l'attitude actuelle et de l'incidence actuelle et délivrant à leur sortie lesdites dérivées premières.

Avantageusement, le dispositif comporte de plus :

- des troisièmes moyens de comparaison pour comparer ladite valeur absolue à un seuil inférieur audit seuil supérieur et pour délivrer un signal si ladite valeur absolue est inférieure audit seuil inférieur ; et
- des seconds moyens logiques interposés entre lesdits premiers moyens de comparaison et lesdits premiers moyens logiques, lesdits seconds moyens logiques recevant à leurs entrées lesdits signaux résultant des comparaisons de ladite valeur absolue avec lesdits seuils et délivrant auxdits premiers moyens logiques :

  . soit aucun signal, si ledit signal résultant de la comparaison de ladite valeur absolue audit seuil inférieur existe ;
  . soit ledit signal résultant de la comparaison de ladite valeur absolue audit seuil supérieur, tant que ladite valeur absolue est supérieure audit seuil inférieur.

Ainsi, selon la présente invention, il est possible de réaliser un dispositif de détection des rafales de vent vertical. Un tel dispositif de détection peut donc permettre d'améliorer le pilotage en profondeur d'un aéronef, notamment pour éviter que les actions de pilotage se combinent avec lesdites rafales pour soumettre l'aéronef à des facteurs de charge excessifs.

Les figures du dessin annexé feront bien comprendre comment l'invention peut être réalisée. Sur ces figures, des références identiques désignent des éléments semblables.

La figure 1 est un diagramme des vitesses d'un avion en vol.

La figure 2 est le schéma synoptique d'un mode de réalisation du dispositif pour la détection de rafales de vent vertical, conforme à la présente invention.

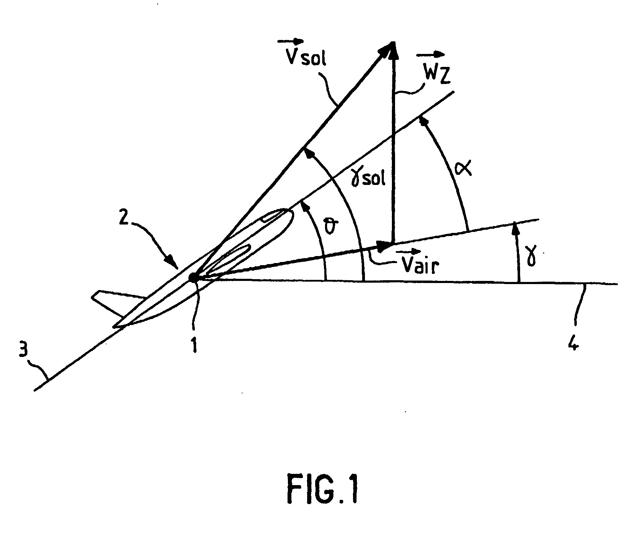

Sur la figure 1, on a représenté le diagramme des vitesses appliquées au centre de gravité 1 d'un avion 2, en vol de montée, rencontrant une rafale de vent vertical ascendant. Sur cette figure 1, l'axe longitudinal 3 de l'avion 2 est incliné de l'assiette $\theta$ par rapport à la ligne d'horizon 4 et présente l'incidence $\alpha$ par rapport à la vitesse aérodynamique $\overrightarrow{Vair}$ qui, elle-même, est inclinée de la pente aérodynamique $\gamma$ par rapport à ladite ligne d'horizon 4. La vitesse $\overrightarrow{Wz}$ du vent vertical ascendant se combine avec ladite vitesse $\overrightarrow{Vair}$ pour composer la vitesse $\overrightarrow{Vsol}$ dudit avion 2 par rapport au sol, cette vitesse $\overrightarrow{Vsol}$ étant inclinée de la pente $\gamma$sol par rapport à la ligne d'horizon 4.

On peut aisément constater que :

$$\gamma\text{sol} = \gamma + (Wz)/Vair, \text{ en appelant } Wz \text{ et } Vair, \text{ respectivement les longueurs des vecteurs } \overrightarrow{Wz} \text{ et } \overrightarrow{Vair}.$$

Par ailleurs, $\gamma = \theta\text{-}\alpha$ de sorte que

$$\gamma\text{sol} = \theta\text{-}\alpha\text{+}(Wz)/Vair.$$

Etant donné, comme expliqué ci-dessus, que l'on cherche, selon l'invention, à améliorer le comportement de l'avion en vol de croisière, on peut s'affranchir de la mesure de ysol et considérer que celle-ci est nulle. Par suite,

$$(Wz)/Vair = \alpha\text{-}\theta$$

Si l'on considère des variations de vent instantanées $\delta/\delta t(Wz/Vair)$, on voit qu'avec l'hypothèse faite ci-dessus, ces variations sont égales à $\dot{\alpha} - \dot{\theta}$, qui représente la différence entre les dérivées premières par rapport au temps de l'incidence actuelle $\alpha$ et de l'attitude actuelle $\theta$ de l'avion 2.

Conformément à la présente invention, on détermine donc des variations de vent instantanées par mesure de ladite différence $\dot{\alpha} - \dot{\theta}$. Pour pouvoir détecter aussi bien les variations positives (ascendantes) que les variations négatives (descendantes) de vent instantanées, on mesure en réalité la valeur absolue $|\dot{\alpha} - \dot{\theta}|$ de ladite différence et on la compare à un seuil de détection de rafale Ss. Un tel seuil Ss est exprimé en degré d'angle par seconde et peut être par exemple égal au moins approximativement à 1°/s.

Ainsi, si $|\dot{\alpha} - \dot{\theta}|$ est supérieur à Ss, on considère que l'avion 2 est soumis à une rafale de vent vertical.

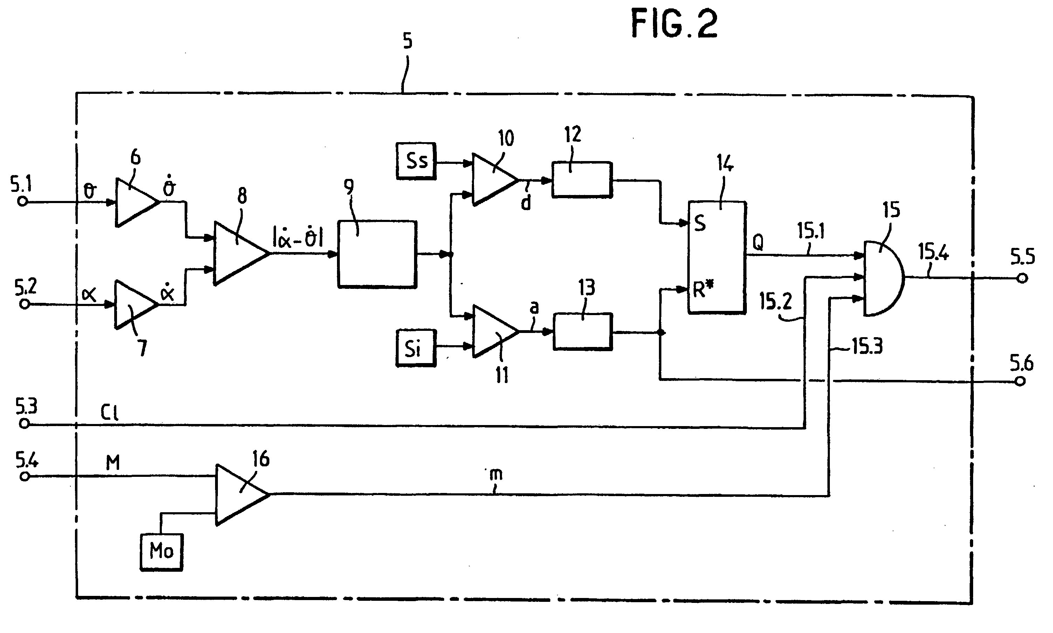

Sur la figure 2, on a représenté le schéma synoptique d'un détecteur 5 de rafales de vent vertical conforme à la présente invention. Ce détecteur 5 est monté à bord de l'avion 2 et il comporte quatre entrées 5.1 à 5.4 et deux sorties 5.5 et 5.6, la sortie 5.6 n'étant pas nécessaire pour toutes les applications dudit détecteur.

Sur les entrées 5.1 et 5.2 sont respectivement appliquées l'attitude actuelle $\theta$ et l'incidence actuelle $\alpha$ de l'aéronef 2. Grâce à des différentiateurs 6 et 7, on obtient respectivement les dérivées premières par rapport au temps $\dot{\theta}$ et $\dot{\alpha}$ de l'attitude actuelle $\theta$ et de l'incidence actuelle $\alpha$. Un soustracteur 8, auxquelles lesdites dérivées sont appliquées, permet d'en faire la différence et délivre à sa sortie la valeur absolue de celle-ci, soit $|\dot{\alpha} - \dot{\theta}|$. Afin d'éliminer les bruits de mesure et d'éviter de fausses détections de rafales de vent vertical, cette valeur absolue est transmise à un filtre 9.

A la sortie du filtre 9, la valeur absolue $|\dot{\alpha} - \dot{\theta}|$ filtrée est adressée à deux comparateurs 10 et 11. Dans le comparateur 10, ladite valeur absolue filtrée est comparée au seuil supérieur Ss, par exemple égal à 1°/s, tandis que, dans le comparateur 11, elle est comparée à un seuil inférieur Si, par exemple égal à 0,5°/s.

Si, et uniquement si, ladite valeur absolue filtrée est :

- supérieure au seuil supérieur Ss, le comparateur 10 émet à sa sortie un signal $\underline{d}$ de détection de rafales de vent vertical ;
- inférieure au seuil inférieur Si, le comparateur 11 émet à sa sortie un signal $\underline{a}$ d'absence de rafales de vent vertical.

Des moyens de comptage 12 et 13 mesurent la durée des signaux $\underline{d}$ et $\underline{a}$ et les adressent à une bascule 14, de type SR*, s'ils durent suffisamment longtemps. Par exemple, le signal $\underline{d}$ est transmis à l'entrée S de la bascule 14, si sa durée est au moins égale à 200 ms, tandis que le signal $\underline{a}$ est transmis à l'entrée R* de la bascule 14, si sa durée est au moins égale à 1s. La sortie Q de la bascule 14 est reliée à l'une des entrées 15.1 d'une porte 15, du type ET à trois entrées, dont la sortie 15.4 forme la sortie 5.5 du détecteur 5. L'autre sortie 5.6 dudit détecteur est reliée à l'entrée R* de ladite bascule 14.

Sur l'entrée 5.3 du détecteur 5 est appliqué un signal $\underline{cl}$, représentatif du fait que l'avion 2 est en configuration lisse, c'est-à-dire qu'aucun de ses volets ou becs n'est sorti. L'entrée 5.3 est reliée à l'entrée 15.2 de la porte 15.

Par ailleurs, l'entrée 5.4 du détecteur 5 reçoit le nombre de Mach actuel M de l'avion 2. Ce nombre de Mach actuel M est comparé, dans un comparateur 16, à un seuil de nombre de Mach Mo, par exemple égal à 0,53. La sortie du comparateur 16 est reliée à l'entrée 15.3 de la porte ET et n'adresse un signal $\underline{m}$ à celle-ci que si le nombre de Mach actuel M est supérieur au seuil Mo.

Le fonctionnement de l'exemple de réalisation du détecteur 5, conforme à l'invention et montré par la figure 2, est le suivant :

A - Vol de croisière sans rafales de vent vertical

L'avion 2 étant en vol de croisière, sa configuration est lisse et son nombre de Mach est supérieur à Mo. Par suite, les entrées 15.2 et 15.3 de la porte ET sont alimentées.

Par ailleurs, puisqu'il n'existe pas de rafales de vent vertical, la valeur absolue $|\dot\alpha - \dot\theta|$, filtrée par le filtre 9, est inférieure au seuil Si, de sorte que le signal $\underline{d}$ n'existe pas et que le signal $\underline{a}$, confirmé en durée par les moyens de comptage 13, est appliqué à l'entrée R* de la bascule 14 et à la sortie 5.6 du détecteur 5. Aucun signal n'apparaît donc à la sortie Q de la bascule 14.

Ainsi, dans ce cas, l'entrée 15.1 de la porte ET 15 n'est pas alimentée et aucun signal n'apparaît à la sortie 5.5 du détecteur 5.

B - Vol de croisière avec apparition d'une rafale de vent vertical

Si maintenant, une rafale de vent vertical apparaît, la valeur absolue filtrée $|\dot\alpha - \dot\theta|$ devient supérieure au seuil Ss, de sorte que le signal $\underline{d}$, confirmé en durée par les moyens de comptage 12, est appliquée à l'entrée S de la bascule 14 et que le signal $\underline{a}$ disparaît. La sortie Q émet donc un signal de sortie qui est transmis à l'entrée 15.1 de la porte 15. Les deux autres entrées 15.2 et 15.3 étant alimentées comme décrit ci-dessus, la porte ET est passante et un signal de présence de rafale de vent vertical apparaît sur la sortie 5.5 du détecteur 5.

C - Vol de croisière avec disparition d'une rafale de vent vertical

Si la rafale de vent vertical disparaît :

- dans un premier temps, la valeur absolue filtrée $|\dot\alpha - \dot\theta|$ devient inférieure au seuil Ss, mais reste supérieure au seuil Si, de sorte que les signaux $\underline{d}$ et $\underline{a}$ sont tous les deux nuls. Il en résulte que la sortie Q reste inchangée et continue à émettre son signal de sortie et que, en conséquence, le signal de présence de rafale de vent vertical continue à être présent sur la sortie 5.5 du détecteur 5 ;
- dans un deuxième temps, la valeur absolue filtrée $|\dot\alpha - \dot\theta|$ devient inférieure au seuil Si, de sorte que le signal $\underline{a}$ apparaît et est appliqué à l'entrée R*. La porte 15 n'émet donc aucun signal à sa sortie Q et l'avion 2 reprend l'état qu'il avait antérieurement à l'apparition de la rafale de vent vertical.

**Revendications**

1. Procédé pour la détection de rafales de vent vertical à bord d'un aéronef en vol de croisière, **caractérisé :**

   - **en ce que** l'on calcule la valeur absolue ($|\dot\alpha - \dot\theta|$) de la différence entre les dérivées premières par rapport au temps ($\dot\alpha$ et $\dot\theta$) de l'incidence actuelle $\alpha$ et de l'attitude actuelle $\theta$ de l'aéronef ;
   - **en ce que** l'on compare ladite valeur absolue à un seuil supérieur (Ss) ;
   - **en ce que** l'on compare le nombre de Mach actuel (M) dudit aéronef à un seuil de nombre de Mach (Mo) ; et
   - **en ce que** l'on engendre un signal électrique représentatif de la présence d'une rafale de vent vertical, lorsque, simultanément :

     . ladite valeur absolue est supérieure audit seuil supérieur ;
     . ledit nombre de Mach actuel est supérieur audit seuil de nombre de Mach ; et
     . les volets et becs aérodynamiques dudit aéronef sont en configuration lisse.

2. Procédé selon la revendication 1, **caractérisé en ce que** ladite valeur absolue ($|\dot\alpha - \dot\theta|$) est filtrée.

**3.** Procédé selon l'une des revendications 1 ou 2, **caractérisé en ce que** ledit seuil supérieur (Ss) est au moins approximativement égal à 1°/s.

**4.** Procédé selon l'une des revendications 1 à 3, **caractérisé en ce que** la génération dudit signal électrique de présence de rafales de vent vertical est subordonnée au fait que ladite valeur absolue est supérieure audit seuil supérieur pendant au moins une première durée déterminée.

**5.** Procédé selon l'une quelconque des revendications 1 à 4, **caractérisé**, de plus, en ce que l'on compare ladite valeur absolue ($|\dot{\alpha} - \dot{\theta}|$) à un seuil (Si) inférieur audit seuil supérieur (Ss).

**6.** Procédé selon la revendication 5, **caractérisé en ce que**, lorsque ladite valeur absolue passe d'une valeur supérieure à une valeur inférieure audit seuil supérieur (Ss), ledit signal représentatif de la présence d'une rafale de vent vertical est maintenu jusqu'à ce que ladite valeur absolue devienne inférieure audit seuil inférieur (Si), pour autant que :

- ledit nombre de Mach actuel est supérieur audit seuil de nombre de Mach ; et
- les volets et becs aérodynamiques dudit aéronef sont en configuration lisse.

**7.** Procédé selon l'une des revendications 5 ou 6, **caractérisé en ce que** ledit seuil inférieur (Si) est au moins approximativement égal à 0,5°/s.

**8.** Procédé selon l'une des revendications 6 ou 7, **caractérisé en ce que** le maintien dudit signal électrique représentatif de la présence d'une rafale de vent vertical est subordonné au fait que ladite valeur absolue est inférieure audit seuil inférieur pendant au moins une seconde durée prédéterminée.

**9.** Dispositif pour la détection de rafales de vent vertical à bord d'un aéronef en vol de croisière, mettant en oeuvre le procédé spécifié sous l'une quelconque des revendications 1 à 8,
**caractérisé en ce qu'**il comporte :

- des moyens de soustraction (8) recevant la dérivée première ($\dot{\alpha}$) par rapport au temps de l'incidence actuelle ($\alpha$) et la dérivée première ($\dot{\theta}$) par rapport au temps de l'attitude actuelle ($\theta$) et délivrant à leur sortie la valeur absolue ($|\dot{\alpha} - \dot{\theta}|$) de la différence entre lesdites dérivées ;
- des premiers moyens de comparaison (10) pour comparer ladite valeur absolue à un seuil supérieur (Ss) et pour délivrer un signal (d) si ladite valeur absolue est supérieure audit seuil supérieur (Ss) ;
- des deuxièmes moyens de comparaison (16) pour comparer le nombre de Mach actuel de l'aéronef (M) à un seuil de nombre de Mach (Mo) et pour délivrer un signal (m) si ledit nombre de Mach actuel est supérieur audit seuil de nombre de Mach ; et
- des premiers moyens logiques (15) de type ET recevant, respectivement, à leurs entrées :

  . ledit signal (d) résultant de la comparaison de ladite valeur absolue audit seuil supérieur ;
  . ledit signal (m) résultant de la comparaison dudit nombre de Mach actuel audit seuil de nombre de Mach (Mo) ; et
  . un signal (cl) représentatif du fait que les volets et les becs aérodynamiques dudit aéronef sont en configuration lisse, lesdits premiers moyens logiques (15) délivrant à leur sortie (15.4) un signal représentatif de la présence de rafales de vent vertical.

**10.** Dispositif de détection selon la revendication 9, **caractérisé en ce qu'**il comporte des moyens de dérivation (6, 7) recevant des signaux représentatifs de l'attitude actuelle ($\theta$) et de l'incidence actuelle ($\alpha$) et délivrant à leur sortie lesdites dérivées premières ($\dot{\alpha}$ et $\dot{\theta}$).

**11.** Dispositif de détection selon l'une des revendications 9 ou 10,
**caractérisé en ce qu'**il comporte :

- des troisièmes moyens de comparaison (11) pour comparer ladite valeur absolue à un seuil (Si) inférieur audit seuil supérieur (Ss) et pour délivrer un signal si ladite valeur absolue est inférieure audit seuil inférieur (Si) ; et
- des seconds moyens logiques (14) interposés entre lesdits premiers moyens de comparaison (10) et lesdits premiers moyens logiques (15), lesdits seconds moyens logiques (14) recevant à leurs entrées lesdits signaux (d) et (a) résultant des comparaisons de ladite valeur absolue avec lesdits seuils et délivrant auxdits seconds moyens logiques (15) :

. soit aucun signal, si ledit signal (a) résultant de la comparaison de ladite valeur absolue audit seuil inférieur existe ;
. soit ledit signal (d) résultant de la comparaison de ladite valeur absolue audit seuil supérieur, tant que ladite valeur absolue ($|\dot{\alpha} - \dot{\theta}|$) est supérieure audit seuil inférieur (Si).

**Claims**

1. Method for detecting vertical gusts of wind on board an aircraft in cruising flight, **characterized:**

   - **in that** the absolute value ($|\dot{\alpha} - \dot{\theta}|$) of the difference between the first differentials with respect to time ($\dot{\alpha}$ and $\dot{\theta}$) of the current incidence $\alpha$ and the current pitch attitude $\theta$ of the aircraft is calculated;
   - **in that** the said absolute value is compared to an upper threshold (Ss);
   - **in that** the current Mach number (M) of the said aircraft is compared to a Mach number threshold (Mo); and
   - **in that** an electrical signal that represents the presence of a vertical gust of wind is generated when simultaneously:

     . the said absolute value is above the said upper threshold;
     . the said current Mach number is above the said Mach number threshold; and
     . the aerodynamic flaps and slats of the said aircraft are in clean configuration.

2. Method according to Claim 1, **characterized in that** the said absolute value ($|\dot{\alpha} - \dot{\theta}|$) is filtered.

3. Method according to either of Claims 1 and 2, **characterized in that** the said upper threshold (Ss) is at least approximately equal to 1°/s.

4. Method according to one of Claims 1 to 3, **characterized in that** the generation of the said electrical signal that vertical gusts of wind are present is subordinated to the fact that the said absolute value is above the said upper threshold for at least a first determined duration.

5. Method according to any one of Claims 1 to 4, **characterized in that** the said absolute value ($|\dot{\alpha} - \dot{\theta}|$) is additionally compared to a threshold (Si) below the said upper threshold (Ss).

6. Method according to Claim 5, **characterized in that** when the said absolute value changes from a value above to a value below the said upper threshold (Ss), the said signal that represents the presence of a vertical gust of wind is sustained until the said absolute value drops below the said lower threshold (Si) so long as:

   - the said current Mach number is above the said Mach number threshold; and
   - the aerodynamic flaps and slats of the said aircraft are in clean configuration.

7. Method according to either of Claims 5 and 6, **characterized in that** the said lower threshold (Si) is at least approximately equal to 0.5°/s.

8. Method according to either of Claims 6 and 7, **characterized in that** the sustaining of the said electrical signal that represents the presence of a vertical gust of wind is subordinated to the fact that the said absolute value is below the said lower threshold for at least a second predetermined duration.

9. Device for detecting vertical gusts of wind on board an aircraft in cruising flight, employing the method specified in any one of Claims 1 to 8, **characterized in that** it comprises:

   - subtracting means (8) receiving the first differential ($\dot{\alpha}$) with respect to time of the current incidence ($\alpha$) and the first differential ($\dot{\theta}$) with respect to time of the current pitch attitude ($\theta$) and delivering on their output the absolute value ($|\dot{\alpha} - \dot{\theta}|$) of the difference between the said differentials;
   - first comparison means (10) for comparing the said absolute value with an upper threshold (Ss) and for delivering a signal (d) if the said absolute value is above the said upper threshold (Ss);

- second comparison means (16) for comparing the current Mach number (M) of the aircraft with a Mach number threshold (Mo) and for delivering a signal (m) if the said current Mach number is above the said Mach number threshold; and
- first logic means (15) of the AND type receiving, respectively, on their inputs:

  . the said signal (d) resulting from the comparison of the said absolute value with the said upper threshold;
  . the said signal (m) resulting from the comparison of the said current Mach number with the said Mach number threshold (Mo); and
  . a signal (cl) that represents the fact that the aerodynamic flaps and slats of the said aircraft are in clean configuration,

the said first logic means (15) delivering on their output (15.4) a signal that represents the presence of vertical gusts of wind.

10. Detection device according to Claim 9, **characterized in that** it comprises differentiating means (6, 7) receiving signals that represent the current pitch attitude ($\theta$) and the current incidence ($\alpha$) and delivering on their output the said first differentials ($\dot{\alpha}$ and $\dot{\theta}$).

11. Detection device according to either of Claims 9 and 10, **characterized in that** it comprises:

- third comparison means (11) for comparing the said absolute value with a threshold (Si) below the said upper threshold (Ss) and for delivering a signal if the said absolute value is below the said lower threshold (Si); and
- second logic means (14) inserted between the said first comparison means (10) and the said first logic means (15), the said second logic means (14) receiving on their inputs the said signals (d) and (a) resulting from the comparisons of the said absolute value with the said thresholds and delivering to the said second logic means (15):

  . either no signal, if the said signal (a) resulting from the comparison of the said absolute value with the said lower threshold exists;
  . or the said signal (d) resulting from the comparison of the said absolute value with the said upper threshold, as long as the said absolute value ($|\dot{\alpha}-\dot{\theta}|$) is above the said lower threshold (Si).

**Patentansprüche**

1. Verfahren zur Detektion von vertikalen Windstössen in einem in Marschflug befindlichen Luftfahrzeug, **dadurch gekennzeichnet:**

- **dass** der absolute Wert ($|\dot{\alpha}-\dot{\theta}|$) der Differenz zwischen den ersten Ableitungen in Bezug auf die Zeit ($\dot{\alpha}$ und $\dot{\theta}$) des Anstellwinkels $\alpha$ und der aktuellen Fluglage $\theta$ des Luftfahrzeugs berechnet wird;
- **dass** der genannte absolute Wert mit einem oberen Schwellenwert (Ss) verglichen wird;
- **dass** die aktuelle Machzahl (M) des genannten Luftfahrzeugs mit einem Machzahl-Schwellenwert (Mo) verglichen wird; und
- **dass** ein für das Vorliegen eines vertikalen Windstosses repräsentatives elektrisches Signal erzeugt wird, wenn gleichzeitig:

  • der genannte absolute Wert größer ist als der genannte obere Schwellenwert;
  • die genannte aktuelle Machzahl größer ist als der genannte Machzahl-Schwellenwert und
  • die aerodynamischen Klappen und Nasen des genannten Luftfahrzeugs sich in glatter Konfiguration befinden.

2. Verfahren gemäss Anspruch 1, **dadurch gekennzeichnet, dass** der genannte absolute Wert ($|\dot{\alpha}-\dot{\theta}|$) gefiltert wird.

3. Verfahren gemäss einem der Ansprüche 1 oder 2, **dadurch gekennzeichnet, dass** der genannte obere Schwellenwert (Ss) mindestens annähernd gleich 1°/s ist.

4. Verfahren gemäss einem der Ansprüche 1 bis 3,

**dadurch gekennzeichnet, dass** die Erzeugung des genannten elektrischen Signals für das Vorliegen von vertikalen Windstössen davon abhängig ist, dass der genannte absolute Wert mindestens über eine erste bestimmte Dauer größer ist als der genannte obere Schwellenwert.

5. Verfahren gemäss einem beliebigen der Ansprüche 1 bis 4, weiterhin **dadurch gekennzeichnet, dass** der genannte absolute Wert ($|\dot{\alpha}-\dot{\theta}|$) mit einem Schwellenwert (Si) verglichen wird, der kleiner ist als der genannte obere Schwellenwert (Ss).

6. Verfahren gemäss Anspruch 5,
**dadurch gekennzeichnet, dass**, wenn der genannte absolute Wert von einem oberen Wert zu einem Wert übergeht, der unter dem genannten oberen Schwellenwert (Ss) liegt, das genannte Signal, das repäsentativ ist für das Vorhandensein eines vertikalen Windstoßes, gehalten wird, bis der genannte absolute Wert unter den genannten unteren Schwellenwert (Si) absinkt, soweit:

- die genannte aktuelle Machzahl größer ist als der genannte Machzahl-Schwellenwert; und
- die aerodynamischen Klappen und Nasen des genannten Luftfahrzeugs sich in glatter Konfiguration befinden.

7. Verfahren gemäss einem der Ansprüche 5 oder 6,
**dadurch gekennzeichnet, dass** der genannte untere Schwellenwert (Si) mindestens annähernd gleich 0,5 °/s ist.

8. Verfahren gemäss einem der Ansprüche 6 oder 7,
**dadurch gekennzeichnet, dass** das Halten des elektrischen Signals, das repräsentativ für das Vorhandensein eines vertikalen Windstoßes ist, davon abhängig ist, dass der genannte absolute Wert mindestens über eine zweite vorher bestimmte Dauer kleiner ist als der genannte untere Schwellenwert.

9. Vorrichtung zur Detektion von vertikalen Windstössen in einem in Marschflug befindlichen Luftfahrzeug, das das in einem beliebigen der Ansprüche 1 bis 8 spezifizierte Verfahren anwendet,
**dadurch gekennzeichnet, dass** sie folgendes umfasst:

- Subtraktionsmittel (8), die die erste Ableitung ($\dot{\alpha}$) in Bezug auf die Zeit des aktuellen Anstellwinkels ($\alpha$) und die erste Ableitung ($\dot{\theta}$) in Bezug auf die Zeit der aktuellen Fluglage ($\theta$) erhalten und an ihrem Ausgang den absoluten Wert ($|\dot{\alpha}-\dot{\theta}|$) der Differenz zwischen den genannten Ableitungen liefern;
- erste Vergleichsmittel (10), um den genannten absoluten Wert mit einem oberen Schwellenwert (Ss) zu vergleichen und ein Signal (d) zu liefern, wenn der genannte absolute Wert größer ist als der genannte obere Schwellenwert (Ss);
- zweite Vergleichsmittel (16), um die aktuelle Machzahl des Luftfahrzeugs (M) mit einem Machzahl-Schwellenwert (Mo) zu vergleichen und um ein Signal (m) zu liefern, wenn die genannte aktuelle Machzahl größer ist als der genannte Machzahl-Schwellenwert; und
- erste Logikmittel (15) des Typs UND, die jeweils an ihren Eingängen folgendes erhalten:

  • das genannte Signal (d), das sich aus dem Vergleich des genannten absoluten Wertes mit dem genannten oberen Schwellenwert ergibt;
  • das genannte Signal (m), das sich aus dem Vergleich der genannten aktuellen Machzahl mit dem genannten Machzahl-Schwellenwert (Mo) ergibt; und
  • ein Signal, das aufgrund der Tatsache repräsentativ ist, dass sich die aerodynamischen Klappen und Nasen des genannten Luftfahrzeugs in glatter Konfiguration befinden, wobei die genannten ersten Logikmittel (15) an ihrem Ausgang (15.4) ein Signal liefern, das repräsentativ für das Vorhandensein von vertikalen Windstößen ist.

10. Detektionsvorrichtung gemäss Anspruch 9,
**dadurch gekennzeichnet, dass** sie Ableitungsmittel (6, 7) umfasst, die repräsentative Signale für die aktuelle Fluglage ($\theta$) und den aktuellen Anstellwinkel ($\alpha$) erhalten und an ihrem Ausgang die genannten ersten Ableitungen ($\dot{\alpha}$ und $\dot{\theta}$) liefern.

11. Detektionsvorrichtung gemäss einem der Ansprüche 9 oder 10,
**dadurch gekennzeichnet, dass** sie folgendes umfasst:

- dritte Vergleichsmittel (11), um den genannten absoluten Wert mit einem Schwellenwert (Si) zu vergleichen, der kleiner ist als der genannte Schwellenwert (Ss), und um ein Signal zu liefern, wenn der genannte absolute Wert kleiner als der genannte untere Schwellenwert (Si) ist; und

- zweite Logikmittel (14), die zwischen den genannten ersten Vergleichsmitteln (10) und den genannten ersten Logikmitteln (15) angeordnet sind, wobei die genannten zweiten Logikmittel (14) an ihren Eingängen die genannten Signale (d) und (a) erhalten, die sich aus den Vergleichen des genannten absoluten Wertes mit den genannten Schwellenwerten ergeben, und den genannten zweiten Logikmitteln (15)

• entweder kein Signal liefern, wenn das genannte Signal (a), das sich aus dem Vergleich des genannten absoluten Werts mit dem genannten unteren Schwellenwert ergibt, vorliegt:

• oder das genannte Signal (d) liefern, das sich aus dem Vergleich des genannten absoluten Werts mit dem genannte oberen Schwellenwert ergibt, solange der genannte absolute Wert ($|\dot\alpha-\dot\theta|$) größer ist als der genannte untere Schwellenwert (Si).

FIG.1

11

# FIG.2

EP 0 845 726 B1